(19) Europäisches Patentamt
European Patent Office
Office européen des brevets

(11) **EP 2 302 415 B1**

(12) **EUROPÄISCHE PATENTSCHRIFT**

(45) Veröffentlichungstag und Bekanntmachung des Hinweises auf die Patenterteilung:
**28.10.2015 Patentblatt 2015/44**

(51) Int Cl.:
**G01S 17/00** *(2006.01)*  **G01S 7/484** *(2006.01)*

(21) Anmeldenummer: **10174674.1**

(22) Anmeldetag: **31.08.2010**

(54) **Optische Sensorvorrichtung und Verfahren zum Betreiben einer optischen Sensorvorrichtung**

Optical sensor device and method for operating an optical sensor device

Dispositif de capteur optique et procédé de fonctionnement d'un dispositif de capteur optique

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **22.09.2009 DE 102009029668**

(43) Veröffentlichungstag der Anmeldung:
**30.03.2011 Patentblatt 2011/13**

(73) Patentinhaber: **BALLUFF GmbH
73765 Neuhausen (DE)**

(72) Erfinder:
• **Bronner, Manuel
72760 Reutlingen (DE)**
• **Forkl, Alexander
73230 Kirchheim (DE)**
• **Rieger, Tobias
73550 Waldstetten (DE)**

(74) Vertreter: **Hoeger, Stellrecht & Partner Patentanwälte mbB
Uhlandstrasse 14c
70182 Stuttgart (DE)**

(56) Entgegenhaltungen:
**DE-A1- 10 018 948    DE-A1-102004 002 530
DE-A1-102008 014 274    DE-C1- 19 855 296**

**Beschreibung**

Die Erfindung betrifft eine optische Sensorvorrichtung, umfassend eine optische Sendeeinrichtung, eine Empfangseinrichtung für von der Sendeeinrichtung emittiertes Licht, und eine Ansteuerungseinrichtung für die Sendeeinrichtung, durch welche die Sendeeinrichtung so angesteuert ist, dass sie periodische Lichtpulse sendet, wobei die Ansteuerungseinrichtung eine Einstelleinrichtung für einen Schaltabstand und/oder eine Empfindlichkeit der optischen Sensorvorrichtung aufweist.

Die Erfindung betrifft ferner ein Verfahren zum Betreiben einer optischen Sensorvorrichtung mit einstellbarem Schaltabstand und/oder einstellbarer Empfindlichkeit, bei dem periodisch optische Lichtpulse gesendet werden.

Aus der DE 198 55 296 C1 ist eine Vorrichtung zur Entfernungsmessung mittels eines Halbleiterlasers im sichtbaren Wellenlängenbereich nach dem Laufzeitverfahren bekannt, wobei eine Schaltungsanordnung zur Modulation einer Messstrahlung und eine Auswerteeinrichtung auf zwei unterschiedliche Betriebsarten umstellbar ist.

Aus der DE 100 18 948 A1 ist eine optoelektronische Vorrichtung zur Detektion von Objekten mit einem Sendelichtstrahlen empfangenden Sender, einem Empfangslichtstrahlen empfangenden Empfänger und Mitteln zur Bestimmung der Entfernung eines Objekts bekannt, wobei die Mittel zur Bestimmung der Entfernung einen Inverter aufweisen, mittels dessen die am Ausgang des Empfängers anstehenden Empfangssignale auf den Eingang des Senders rückgekoppelt sind, so dass bei einem innerhalb eines ersten Entfernungsmessbereichs angeordneten Objekt die Sendeleistung des Senders mit einer Frequenz moduliert ist, die durch die Laufzeit der Sendelichtstrahlen zum Objekt bestimmt ist, und dass aus dem entsprechend modulierten Empfangssignal ein Schaltsignal ableitbar ist, welches bei einem im Entfernungsbereich angeordneten Objekt den Schaltzustand "ein" und ansonsten den Schaltzustand "aus" einnimmt.

Aus der DE 10 2004 002 530 A1 ist ein elektrischer Abstandsmesser bekannt, welcher eine Vorrichtung zum Erzeugen eines Modulationssignals zum Modulieren von Messlicht, das auf einen zu messenden Gegenstand gestrahlt wird, umfasst. Es ist eine Impulssignal-Erzeugungsvorrichtung zum periodischen Erzeugen eines intermittierenden Impulssignals für die Erzeugung von intermittierendem moduliertem Messlicht durch intermittierendes Addieren des Modulationssignals zu einem Lichtemissionselement vorgesehen. Ferner ist eine Frequenzsignal-Erzeugungsvorrichtung zum Erzeugen eines internen Frequenzsignals mit einer Frequenz, die sich von der des Modulationssignals unterscheidet, vorgesehen. Weiterhin ist ein Lichtempfangselement zum Ausgeben eines Lichtempfangssignals durch Empfang des intermittierenden modulierten Messlichts vorhanden. Es ist eine Differenzfrequenzsignal-Erzeugungsvorrichtung zum Erzeugen eines intermittierenden Differenzfrequenzsignals durch Eingabe des Lichtempfangssignals und des internen Frequenzsignals vorhanden. Weiterhin ist eine arithmetische Logikeinheit zum Berechnen eines Abstands zu dem zu messenden Gegenstand auf der Grundlage einer Phasendifferenz zwischen einer Phase des intermittierenden Differenzfrequenzsignals, das von der Differenzfrequenzsignal-Erzeugungsvorrichtung ausgegeben wurde, und einer Phase eines intermittierenden Differenzfrequenzsignals, das durch einen optischen Bezugspfad erhalten wurde, vorgesehen.

Aus der DE 10 2008 014 274 A1 ist ein Verfahren zum Bestimmen einer Entfernung zu einem Objekt bekannt, bei dem ein Sendelichtstrahl von einem Lichtsender ausgesandt wird, ein Empfangslichtstrahl mit einem Lichtempfänger empfangen wird, wobei der Empfangslichtstrahl durch Reflektion des Sendelichtstrahls an dem Objekt entsteht, und die Entfernung anhand einer Laufzeit des Sende- und Empfangslichtstrahls bestimmt wird, wobei der Sendelichtstrahl mit einem rechteckwellenförmigen Modulationssignal amplitudenmoduliert wird und das Modulationssignal eine Vielzahl von Rechteckpulsen besitzt, die in einer Vielzahl von Gruppen auftreten. Die Gruppen treten in variierenden zeitlichen Abständen zueinander auf und weisen wechselnde Anzahlen von Rechteckpulsen auf.

Der Erfindung liegt die Aufgabe zugrunde, eine optische Sensorvorrichtung der eingangs genannten bereitzustellen, welche eine einstellbare Empfindlichkeit und/oder einen einstellbaren Schaltabstand aufweist, bei welcher keine Einstellungsvariation in einem Empfängerpfad notwendig ist.

Diese Aufgabe wird bei der eingangs genannten optischen Sensorvorrichtung erfindungsgemäß dadurch gelöst, dass die Ansteuerungseinrichtung eine Anpassungseinrichtung umfasst, durch welche eine mittlere optische Ausgangsleistung der Sendeeinrichtung auf einen konstanten Wert unabhängig von der Einstellung des Schaltabstands und/oder der Empfindlichkeit eingestellt ist, indem die Anpassungseinrichtung die optische Ausgangsleistung in Lichtpulsen in einer Periode und die optische Ausgangsleistung in Nichtpulszeiträumen innerhalb einer Periode gesteuert anpasst.

Bei Anwendungen einer optischen Sensorvorrichtung kann sich die grundsätzliche Aufgabenstellung ergeben, dass Objekte in unterschiedlichen Abständen detektiert werden sollen. Es existiert auch die Aufgabenstellung, dass verschieden große Objekte mit unterschiedlichen Reflexionseigenschaften im Erfassungsbereich der optischen Sensorvorrichtung erkannt werden sollen. Dies ist durch die Einstellung des Schaltabstands bzw. der Empfindlichkeit möglich.

Bei der erfindungsgemäßen Lösung wird die mittlere optische Ausgangsleistung durch die Anpassungseinrichtung immer auf einen konstanten Wert eingestellt bzw. gehalten, welcher auch nicht variiert wird, wenn die Einstellung der Empfindlichkeit bzw. des Schaltabstands variiert wird. Die mittlere optische Ausgangsleistung ist dadurch unabhängig von der Empfindlichkeitseinstellung bzw. Schaltpunkteinstellung der Sensorvorrichtung. Dadurch ändert sich die Helligkeit des Sendestrahls für das menschliche Auge nicht. Dies ermöglicht das präzise Ausrichten der Sensorvorrichtung, da geringe Helligkeiten nicht auftreten können. Bei aus dem Stand der Technik bekannten Sensorvorrichtungen ist die Helligkeit des von einer optischen Sendeeinrichtung ausgestrahlten Lichtstrahls geringer, wenn Objekte im Nahbereich detektiert werden sollen, als wenn Objekte im Fernbereich detektiert werden sollen.

Bei der erfindungsgemäßen Lösung erfolgt die Anpassung an die eingestellte Empfindlichkeit bzw. den eingestellten Schaltabstand ausschließlich in einem Sendepfad und nicht in einem Empfängerpfad (welcher die Empfangseinrichtung umfasst). Vorzugsweise umfasst ein Empfängerpfad einen Verstärkerpfad für die Signalaufbereitung des empfangenen Signals. Bei der erfindungsgemäßen Lösung ist keine variierende Verstärkung in dem Verstärkerpfad notwendig. Dadurch lässt sich ein Verstärkerpfad mit fest eingestellten Parametern realisieren. Grundsätzlich ist dadurch eine Integration in eine integrierte Schaltung möglich.

Weiterhin ist es durch die Einstellung der Empfindlichkeit bzw. des Schaltabstands in dem Sendepfad möglich, Störungen gering zu halten, da der Sendepfad im Gegensatz zum Empfängerpfad meist niederohmig und dadurch unanfälliger für Störungen ist.

Objekte können in unterschiedlichen Entfernungen immer an der für den Benutzer optimalen Position erkannt werden.

Die erfindungsgemäße optische Sensorvorrichtung ist als optoelektronische Sensorvorrichtung, beispielsweise als Lichttaster, Reflexionslichtschranke oder Einweglichtschranke realisiert.

Insbesondere ist der konstante Wert für die mittlere optische Ausgangsleistung fest vorgegeben oder feststellbar einstellbar.

Die mittlere optische Ausgangsleistung in einer Periode setzt sich zusammen aus einer Summe der Sendeleistung eines oder mehrerer Lichtpulse und einer Ausgangsleistung in einem oder mehreren Nichtpulszeiträumen zwischen benachbarten Lichtpulsen. Grundsätzlich können die Lichtpulse eine beliebige Form aufweisen und eine Periode kann eine beliebige Anzahl von Lichtpulsen enthalten.

Ganz besonders vorteilhaft ist es, wenn durch die Anpassungseinrichtung in Abhängigkeit der Einstellung des Schaltabstands und/oder der Empfindlichkeit eine Sendeleistung der Lichtpulse und die Ausgangsleistung in Nichtpulszeiträumen so angepasst einstellt, dass der konstante Wert für die mittlere optische Ausgangsleistung festgelegt ist. Bei einer Variation in der Einstellung des Schaltabstands bzw. der Empfindlichkeit wird die Sendeleistung der Lichtpulse und/oder die Ausgangsleistung in Nichtpulszeiträumen so angepasst variiert, dass der konstante Wert für die mittlere optische Ausgangsleistung erhalten bleibt.

Grundsätzlich ist es vorgesehen, dass die Ansteuerungseinrichtung eine Pulsbreite und/oder Pulshöhe einstellt. Dadurch ist eine Einstellung der Empfindlichkeit bzw. des Schaltabstands möglich. Dadurch ist auch eine Anpassung der Sendeleistung der Lichtpulse möglich, um eine konstante mittlere optische Ausgangsleistung zu realisieren.

Es ist vorteilhaft, wenn die Ansteuerungseinrichtung eine Ausgangsleistung in Nichtpulszeiträumen einstellt. Grundsätzlich kann dabei auch die Länge eines Nichtpulszeitraums variiert werden. Insbesondere sorgt die Anpassungseinrichtung für eine entsprechende Einstellung, um angepasst an eine eingestellte Empfindlichkeit bzw. einen eingestellten Schaltabstand eine feste mittlere optische Ausgangsleistung zu erhalten.

Bei einem Ausführungsbeispiel sind Lichtpulse Rechteckpulse. Dadurch ergibt sich eine Einstellbarkeit zur Erhaltung der mittleren optischen Ausgangsleistung. Grundsätzlich können die Lichtpulse aber eine beliebige Signalform aufweisen. Beispielsweise ist bei sehr schnellen Signalen ein e-förmiger Verlauf denkbar.

Aus dem gleichen Grund ist es günstig, wenn eine Periode einen einzigen Lichtpuls aufweist. Eine Periode kann auch mehrere Lichtpulse aufweisen. Beispielsweise sind in einer Periode zwei aufeinanderfolgende Lichtpulse vorgesehen. Der erste Lichtpuls kann dann zur Triggerung oder Kalibrierung verwendet werden und der zweite Lichtpuls ist der eigentliche Messpuls.

Vorteilhaft ist es, wenn ein Sendepulsgenerator vorgesehen ist. Durch den Sendepulsgenerator ist es auf einfache Weise möglich, beispielsweise Strompulse zu erzeugen, mit denen sich die optische Sendeeinrichtung beaufschlagen lässt, um Lichtpulse zu erzeugen.

Bei einem konstruktiv einfachen Ausführungsbeispiel weist die optische Sensorvorrichtung eine erste steuerbare Stromquelle zur Erzeugung von Lichtpulsen und eine zweite steuerbare Stromquelle zur Lichterzeugung in Nichtpulszeiträumen auf, wobei die erste Stromquelle und die zweite Stromquelle die Sendeeinrichtung beaufschlagen. Durch entsprechende Ansteuerung der ersten steuerbaren Stromquelle und der zweiten steuerbaren Stromquelle lässt sich eine Empfindlichkeitseinstellung bzw. Schaltpunkteinstellung realisieren, wobei sich auf einfache Weise eine mittlere optische Ausgangsleistung konstant halten lässt. Vorzugsweise sind dabei die erste Stromquelle und die zweite Stromquelle parallel geschaltet und beispielsweise die erste Stromquelle lässt sich über eine entsprechende Schalteinrichtung getaktet ankoppeln und abkoppeln. Dadurch lassen sich auf einfache Weise Lichtpulse erzeugen.

Insbesondere ist die erste steuerbare Stromquelle durch einen Sendepulsgenerator angesteuert, um so auf einfache Weise Lichtpulse erzeugen zu können.

Bei einer Ausführungsform ist ein steuerbarer Schalter vorgesehen, welcher von dem Sendepulsgenerator angesteuert ist und über welchen eine Strombeaufschlagung der Sendeeinrichtung durch die erste Stromquelle schaltbar ist. Durch den Schalter lässt sich die erste Stromquelle der Sendeeinrichtung getaktet zuschalten und abschalten.

Dadurch lassen sich auf einfache Weise periodische Lichtpulse mit einstellbarer Amplitude und damit einstellbarer optischer Sendeleistung erzeugen.

Günstigerweise legt die Anpassungseinrichtung einen Sendestrom der ersten Stromquelle für einen Lichtpuls und einen Sendestrom der zweiten Stromquelle für einen Nichtpulszeitraum in einer festen Beziehung fest. Dadurch ist zum einen eine Einstellung der Empfindlichkeit bzw. des Schaltabstands möglich und zum anderen lässt sich unabhängig von dieser Einstellung die mittlere optische Ausgangsleistung festhalten.

Beispielsweise ist die Beziehung zur Festlegung des Verhältnisses zwischen dem Sendestrom der ersten Stromquelle und dem Sendestrom der zweiten Stromquelle

$$\alpha \, I_{puls} = k + \beta \cdot I_{pause}^{-1} \, ,$$

wobei $I_{puls}$ der Sendestrom für einen Lichtpuls, $I_{pause}$ der Sendestrom für einen Nichtpulszeitraum, $\alpha$ und $\beta$ Faktoren zur Anpassung an unterschiedliche Stromkennlinien sind und k ein konstanter Offset ist.

Der Erfindung liegt ferner die Aufgabe zugrunde, ein Verfahren der eingangs genannten Art bereitzustellen, mit dem sich eine einfache Einstellbarkeit ergibt.

Diese Aufgabe wird bei dem eingangs genannten Verfahren erfindungsgemäß dadurch gelöst, dass eine mittlere optische Ausgangsleistung auf einen konstanten Wert festgelegt wird, welcher unabhängig von dem eingestellten Schaltabstand und/oder der eingestellten Empfindlichkeit ist, und bei Änderung der Einstellung des Schaltabstands und/oder der Einstellung der Empfindlichkeit die optische Sendeleistung von einem oder mehreren Lichtpulsen in einer Periode und die optische Ausgangsleistung in Nichtpulszeiträumen zwischen Lichtpulsen in einer Periode so gesteuert angepasst wird, dass die mittlere optische Ausgangsleistung in einer Periode konstant bleibt.

Das erfindungsgemäße Verfahren lässt sich auf der erfindungsgemäßen optischen Sensorvorrichtung durchführen.

Das erfindungsgemäße Verfahren weist die bereits im Zusammenhang mit der erfindungsgemäßen optischen Sensorvorrichtung erläuterten Vorteile auf.

Weitere vorteilhafte Ausgestaltungen des erfindungsgemäßen Verfahrens wurden bereits im Zusammenhang mit der Beschreibung der optischen Sensorvorrichtung erläutert.

Insbesondere wird eine Amplitude und/oder Breite von Lichtpulsen und/oder eine Ausgangsleistung in Nichtpulszeiträumen angepasst, um eine konstante mittlere optische Ausgangsleistung unabhängig von der Einstellung des Schaltabstands und/oder der Empfindlichkeit zu erhalten. Es erfolgt ein (automatischer) Eingriff für das Aussenden von Licht durch Änderung der Sendeenergie. Beispielsweise wird zur Verringerung der Empfindlichkeit die Sendeleistung in Lichtpulsen reduziert. Die entsprechende Leistung wird in Nichtpulszeiträume verschoben, um eine feste mittlere optische Ausgangsleistung zu gewährleisten. Bei der erfindungsgemäßen Lösung wird nicht die mittlere optische Ausgangsleistung variiert, sondern nur eine Peakleistung.

Bei einer Ausführungsform wird eine optische Sendeeinrichtung, welche Licht emittiert, durch den Sendestrom einer ersten Stromquelle und einer zweiten Stromquelle beaufschlagt, wobei die Ströme der ersten Stromquelle und der zweiten Stromquelle in einer festen Beziehung zueinander stehen. Dadurch lässt sich auf einfache Weise eine Einstellung der Empfindlichkeit bzw. des Schaltabstands realisieren. Durch Vorgabe einer entsprechenden Beziehung zwischen den Strömen der ersten Stromquelle und der zweiten Stromquelle lässt sich eine konstante mittlere optische Ausgangsleistung unabhängig von der eingestellten Empfindlichkeit bzw. des eingestellten Schaltabstands erhalten.

Günstig ist es, wenn der Sendestrom der ersten Stromquelle gepulst wird. Dadurch lässt sich ein Sendestrahl mit Lichtpulsen erreichen.

Die nachfolgende Beschreibung bevorzugter Ausführungsformen dient im Zusammenhang mit der Zeichnung der näheren Erläuterung der Erfindung. Es zeigen:

Figur 1          eine schematische Blockschaltbilddarstellung eines Ausführungsbeispiels einer erfindungsgemäßen optischen Sensorvorrichtung; und

Figur 2(a) bis (c)     unterschiedliche Sendemuster bei unterschiedlichen Einstellungen des Schaltabstands und/oder der Empfindlichkeit der optischen Sensorvorrichtung gemäß Figur 1 in einer Darstellung der zeitabhängigen optischen Ausgangsleistung.

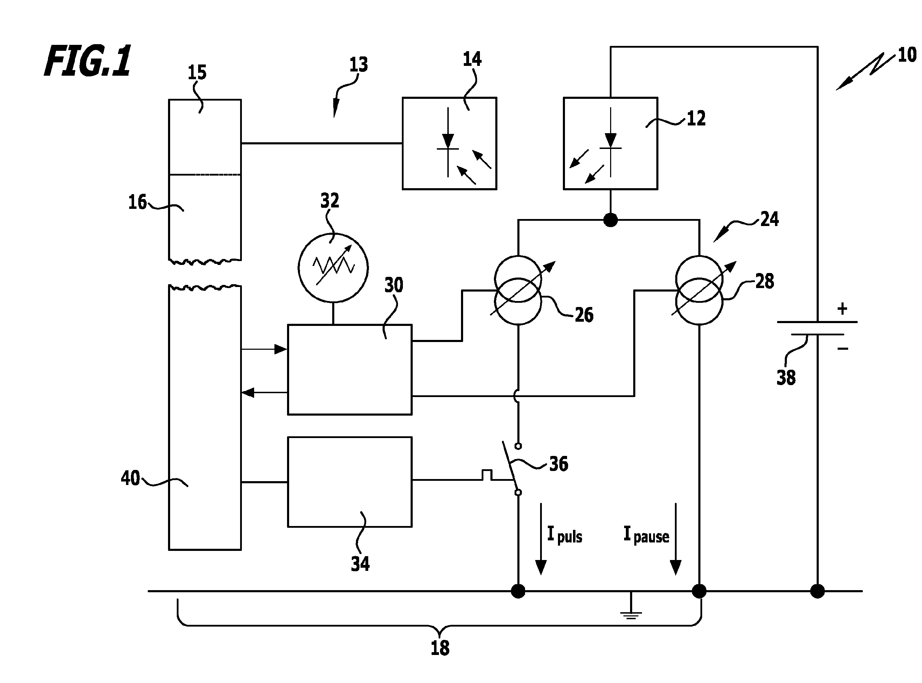

Ein Ausführungsbeispiel einer erfindungsgemäßen optischen (optoelektronischen) Sensorvorrichtung, welches in Figur 1 gezeigt und dort mit 10 bezeichnet ist, umfasst eine optische Sendeeinrichtung 12, durch welche Licht emittierbar ist. Die optische Sendeeinrichtung 12 weist eine oder mehrere Lichtquellen beispielsweise in der Form einer oder mehrerer Leuchtdioden oder eines oder mehrerer Laser auf.

Der optischen Sendeeinrichtung 12 ist in einem Empfängerpfad 13 eine Empfangseinrichtung 14 zugeordnet, durch welche von der optischen Sendeeinrichtung 12 emittiertes Licht empfangbar und detektierbar ist. Die Empfangseinrichtung 14 steht in Verbindung mit einer Verstärkungseinrichtung 15 und einer Auswertungseinrichtung 16, welche die empfangenen Signale auswertet.

Es ist grundsätzlich möglich, dass die optische Sendeeinrichtung 12 und die Empfangseinrichtung 14 direkt aufeinander ausgerichtet sind und die Empfangseinrichtung 14 von der optischen Sendeeinrichtung 12 direkt bestrahlt wird. Es ist dann beispielsweise detektierbar, ob ein Gegenstand im Strahlengang zwischen der optischen Sendeeinrichtung 12 und der Empfangseinrichtung 14 vorhanden ist.

Es ist beispielsweise auch möglich, dass die optische Sendeeinrichtung 12 als Reflexionslichtschranke ausgebildet ist, wobei dann von der optischen Sendeeinrichtung 12 ausgesandtes Licht an einem Reflektor reflektiert wird und reflektiertes Licht durch die Empfangseinrichtung 14 empfangen wird.

Ausführungsbeispiele für die optische Sensorvorrichtung 10 sind Lichttaster, Reflexionslichtschranke, Einweglichtschranke usw.

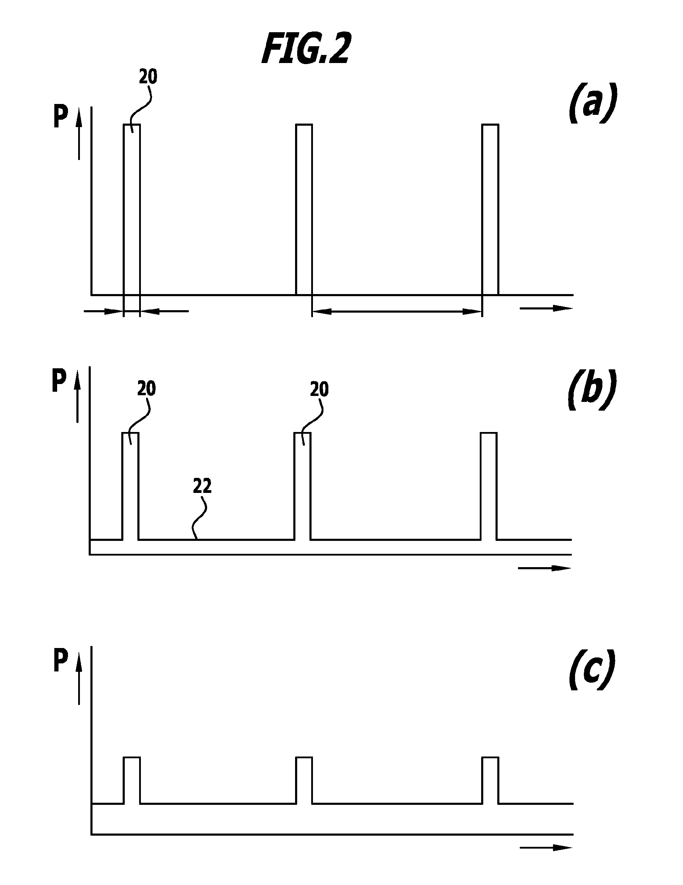

Die Sensorvorrichtung 10 weist eine als Ganzes mit 18 bezeichnete Ansteuerungseinrichtung für die optische Sendeeinrichtung 12 auf. Die Ansteuerungseinrichtung 18 stellt einen definierten Ansteuerungsstrom der optischen Sendeeinrichtung 12 zur gesteuerten Lichtemission bereit. Die Ansteuerungseinrichtung 18 steuert dabei die optische Sendeeinrichtung so an, dass periodische Lichtpulse 20 (siehe beispielsweise Figur 2(a)) ausgesandt werden.

Bei einer Ausführungsform sind die Lichtpulse 20 Rechteckpulse. Grundsätzlich sind auch andere Pulsformen möglich.

Bei einem Ausführungsbeispiel wird in einer Periode ein Lichtpuls 20 ausgesandt (Figur 2(a)). Grundsätzlich ist es auch möglich, dass innerhalb einer Periode mehrere Lichtpulse (unterschiedlicher Form) emittiert werden.

Zwischen benachbarten Lichtpulsen 20 liegt ein Nichtpulszeitraum 22 (Figur 2(b) und Figur 2(c)). Wenn eine Periode nur einen einzigen Lichtpuls 20 umfasst, dann erstreckt sich der Nichtpulszeitraum 22 über die Periodenzeit abzüglich der Zeitdauer dieses einzigen Lichtpulses. Wenn eine Periode mehrere Lichtpulse aufweist, dann erstrecken sich die Nichtpulszeiträume einer Periode entsprechend auf die Zeitdauer der Periode abzüglich der Summe der Zeitdauern der entsprechenden Lichtpulse in der Periode.

Die Ansteuerungseinrichtung 18 umfasst eine Stromquelleneinrichtung 24, welche einen Beaufschlagungsstrom für die optische Sendeeinrichtung 12 bereitstellt.

Bei dem gezeigten Ausführungsbeispiel umfasst die Stromquelleneinrichtung 24 eine erste Stromquelle 26 und eine zweite Stromquelle 28. Die erste Stromquelle 26 und die zweite Stromquelle 28 sind jeweils steuerbar. Zur Steuerung ist eine Steuereinheit 30 der Ansteuerungseinrichtung 18 vorgesehen, welche signalwirksam an die erste Stromquelle 26 und die zweite Stromquelle 28 gekoppelt ist.

Die zweite Stromquelle 28 stellt den Sendestrom für Nichtpulszeiträume 22 bereit. Die erste Stromquelle 26 stellt den Sendestrom für Lichtpulse 20 bereit.

Die Ansteuerungseinrichtung 18 weist eine Einstelleinrichtung 32 auf, durch welche die Empfindlichkeit der optischen Sensorvorrichtung 10 und/oder ein Schaltabstand der optischen Sensorvorrichtung 10 einstellbar ist. Diese Einstellung erfolgt insbesondere über Einstellung der Amplitude der Lichtpulse 20 und damit durch entsprechende Einstellung des Sendestroms der ersten Stromquelle 26.

Die Ansteuerungseinrichtung 18 weist ferner einen Sendepulsgenerator 34 auf, welcher für die getaktete Erzeugung der Lichtpulse 20 sorgt. Durch die Pulse des Sendegenerators 34 ist die erste Stromquelle 26 beaufschlagbar, damit über entsprechende Strompulse Lichtpulse 20 durch die optische Sendeeinrichtung 12 emittierbar sind.

Der Sendepulsgenerator 34 ist signalwirksam über einen Schalter 36 mit der ersten Stromquelle 26 verbunden.

Die optische Sensorvorrichtung 10 weist eine Energieversorgungseinrichtung 38 auf, über welche sich die optische Sendeeinrichtung 12 und weitere Komponenten der optischen Sensorvorrichtung 10 mit elektrischer Energie versorgen lassen.

Die optische Sensorvorrichtung 10 umfasst ferner eine Anpassungseinrichtung 40, durch welche sich eine mittlere optische Ausgangsleistung der optischen Sendeeinrichtung 12 unabhängig von der durch die Einstelleinrichtung 32 eingestellten Empfindlichkeit und/oder dem Schaltabstand konstant halten lässt.

Die mittlere optische Ausgangsleistung der optischen Sendeeinrichtung 12 ist gegeben durch:

$$\overline{P} = \frac{1}{T} \int_T (P_{puls} + P_{pause})\, dt \, .$$

T ist dabei eine Periodendauer, $P_{puls}$ ist die optische Sendeleistung der optischen Sendeeinrichtung 12 für einen oder mehrere Pulse in einer Periode und $P_{pause}$ ist die Ausgangsleistung der optischen Sendeeinrichtung 12 in einem oder mehreren Nichtpulszeiträumen 22 innerhalb einer Periode mit Periodendauer T.

Die Anpassungseinrichtung 40 funktioniert so, dass sie die mittlere optische Ausgangsleistung $\overline{P}$ konstant hält. Der konstante Wert $\overline{P}_{const}$ ist dabei festgelegt. Er kann an der optischen Sensorvorrichtung 10 unveränderbar festgelegt sein oder einstellbar festgelegt sein.

Die Anpassungseinrichtung 40 sorgt dafür, dass unabhängig von der über die Einstellungseinrichtung 32 eingestellten Empfindlichkeit bzw. dem eingestellten Schaltabstand die mittlere optische Ausgangsleistung $\overline{P}_{const}$ erhalten bleibt. Sie ist dazu mit der Steuereinheit 30 verbunden und steuert diese an.

Die Anpassungseinrichtung 40 sorgt dafür, dass die Amplitude von Lichtpulsen 20 und/oder eine Pulsbreite und/oder die optische Ausgangsleistung in Nichtpulszeiträumen 22 so angepasst eingestellt ist/wird, dass die mittlere optische Ausgangsleistung auf $\overline{P}_{const}$ bleibt.

In den Figuren 2(a) bis (c) ist ein Ausführungsbeispiel angedeutet, bei dem die Pulsbreite konstant bleibt und das Verhältnis der Amplitude der Lichtpulse 20 zu der optischen Ausgangsleistung in Nichtpulszeiträumen 22 variiert wird.

In Figur 2(a) ist ein Beispiel gezeigt, bei dem die Ausgangsleistung in Nichtpulszeiträumen 22 bei Null liegt. Die Amplitude der Lichtpulse 20 ist entsprechend hoch. Die optische Ausgangsleistung in einer Periode liegt alleine in den Lichtpulsen 20. Eine solche Einstellung liegt vorteilhafterweise dann vor, wenn eine hohe Empfindlichkeit bzw. ein großer Schaltabstand erwünscht wird.

In Figur 2(b) ist eine Einstellung gezeigt, bei der die optische Ausgangsleistung in Nichtpulszeiträumen 22 im Vergleich mit der Einstellung gemäß Figur 2(a) erhöht ist. Dagegen ist die optische Sendeleistung in Lichtpulsen 20 erniedrigt.

In Figur 2(c) ist eine weitere Einstellung gezeigt, bei der die Ausgangsleistung in Nichtpulszeiträumen 22 weiterhin erhöht ist und die Sendeleistung in Lichtpulsen 20 erniedrigt ist. In allen drei Beispielen der Figur 2 ist die mittlere optische Ausgangsleistung $\overline{P}$ in einer Periode gleich, nämlich $\overline{P}_{const}$. Dafür sorgt die Anpassungseinrichtung 40.

Die erfindungsgemäße optische Sensorvorrichtung 10 funktioniert wie folgt:

Die optische Sendeeinrichtung 12 emittiert optische Lichtpulse 20. Diese werden in der Empfangseinrichtung 14 empfangen und nach Verstärkung durch die Verstärkungseinrichtung 15 von der Auswertungseinrichtung 16 ausgewertet.

Über die Einstelleinrichtung 32 ist eine Einstellung der Empfindlichkeit und/oder des Schaltabstands möglich. Die Anpassungseinrichtung 40 ermöglicht es, bei Variation der eingestellten Empfindlichkeit bzw. des eingestellten Schaltabstands trotzdem die Helligkeit des Sendestrahls, welcher durch die optische Sendeeinrichtung 12 emittiert wird, für das menschliche Auge gleich zu halten. Die entsprechende Anpassung durch Einstellung erfolgt dabei allein in einem Sendepfad der optischen Sensorvorrichtung 10, d. h. es erfolgt keine Einstellungsvariation in dem Empfängerpfad 13.

Die Anpassungseinrichtung 40 sorgt dafür, dass die mittlere optische Ausgangsleistung $\overline{P}$ auf einem festen Wert $\overline{P}_{const}$ liegt, unabhängig davon, wie die Empfindlichkeit bzw. der Schaltabstand eingestellt sind. Dazu wird die optische Ausgangsleistung in Lichtpulsen 20 in einer Periode und die optische Ausgangsleistung in Nichtpulszeiträumen 22 innerhalb einer Periode so gesteuert angepasst, dass die mittlere optische Ausgangsleistung bei $\overline{P}_{const}$ bleibt. Die Anpassungseinrichtung 40 liefert ihre entsprechenden Signale an die Steuereinheit 30, welche wiederum die erste Stromquelle 26 und die zweite Stromquelle 28 ansteuert.

Die zweite Stromquelle 28 liefert den Strom für die Lichtemission in Nichtpulszeiträumen 22. Zur Erzeugung von Lichtpulsen 20 wird über den Schalter 36 die erste Stromquelle 26 getaktet hinzugeschaltet und die optische Sendeeinrichtung 12 gibt dann ein periodisches Signal ab.

Die zweite Stromquelle 28 wird über die Steuereinheit 30 mit einem Strom $I_{pause}$ angesteuert. Die erste Stromquelle 26 wird über einen Strom $I_{puls}$ angesteuert. Der Schalter 36 wird durch den Sendegenerator 34 angesteuert und entsprechend periodisch geschlossen zur Erzeugung der periodischen Lichtpulse 20.

Die Anpassungseinrichtung 40 sorgt dafür, dass der Strom $I_{puls}$ und der Strom $I_{pause}$ in einem bestehenden Verhältnis zueinander stehen, damit die mittlere optische Ausgangsleistung fest bleibt.

Beispielsweise wird dieses Verhältnis gewählt als:

$$\alpha \, I_{puls} = k + \beta \cdot I_{pause}^{-1} .$$

$\alpha$ und $\beta$ sind dabei Faktoren, um Steigungen in der Stromkennlinie anzupassen. k ist eine Konstante in der Offseteinstellung.

Der Strom $I_{puls}$ wiederum ist durch die Einstellung der Empfindlichkeit bzw. des Schaltabstands durch die Einstelleinrichtung 32 vorgegeben.

Dieses Verfahren lässt sich grundsätzlich für beliebige Formen der Lichtpulse 20 anwenden.

Bei der erfindungsgemäßen Lösung können Objekte in unterschiedlichen Entfernungen an der für den Benutzer optimalen Position erkannt werden. Die Einstellung der Empfindlichkeit bzw. des Schaltabstands der optischen Sensorvorrichtung 10 findet allein im Sendepfad der optischen Sensorvorrichtung 10 statt. An dem Empfängerpfad 13 müssen keine Einstellungen vorgenommen werden. Der Sendepfad ist im Vergleich zum Empfangspfad meist niederohmig und somit unanfälliger für Störungen.

Weiterhin wird durch die erfindungsgemäße Lösung eine konstante Helligkeit für die Lichtemission durch die optische Sendeeinrichtung 12 unabhängig von der eingestellten Empfindlichkeit oder dem eingestellten Schaltabstand erreicht. Der Benutzer kann dadurch die optische Sendevorrichtung 10 immer optimal für die jeweilige Anwendung ausrichten, da der Sendestrahl der optischen Sendeeinrichtung 12 immer gleich gut sichtbar ist.

Weiterhin kann ein Verstärkerpfad in dem Empfängerpfad 13 mit fest eingestellten Parametern realisiert werden, da im Empfängerpfad 13 keine Variation stattfindet. Bei einem Ausführungsbeispiel ist ein Verstärkerpfad in dem Empfängerpfad 13 in einer integrierten Schaltung realisiert. Dies ist durch die erfindungsgemäße Lösung ermöglicht.

**Patentansprüche**

1. Optische Sensorvorrichtung, umfassend eine optische Sendeeinrichtung (12), eine Empfangseinrichtung (14) für von der Sendeeinrichtung (12) emittiertes Licht, und eine Ansteuerungseinrichtung (18) für die Sendeeinrichtung (12), durch welche die Sendeeinrichtung (12) so angesteuert ist, dass sie periodische Lichtpulse (20) sendet, wobei die Ansteuerungseinrichtung (18) eine Einstelleinrichtung (32) für einen Schaltabstand und/oder eine Empfindlichkeit der optischen Sensorvorrichtung aufweist, **dadurch gekennzeichnet , dass** die Ansteuerungseinrichtung (18) eine Anpassungseinrichtung (40) umfasst, durch welche eine mittlere optische Ausgangsleistung ($\overline{P}$) der Sendeeinrichtung (12) auf einen konstanten Wert ($\overline{P}_{const}$) unabhängig von der Einstellung des Schaltabstands und/oder der Empfindlichkeit eingestellt ist, indem die Anpassungseinrichtung (40) die optische Ausgangsleistung in Lichtpulsen (20) in einer Periode und die optische Ausgangsleistung in Nichtpulszeiträumen (22) innerhalb einer Periode gesteuert anpasst.

2. Optische Sensorvorrichtung nach Anspruch 1, **dadurch gekennzeichnet, dass** der konstante Wert ($\overline{P}_{const}$) fest vorgegeben ist oder feststellbar einstellbar ist.

3. Optische Sensorvorrichtung nach einem der vorangehenden Ansprüche, **dadurch gekennzeichnet, dass** die Anpassungseinrichtung (40) bei einer Variation der Einstellung des Schaltabstands und/oder der Empfindlichkeit eine Sendeleistung der Lichtpulse (20) und der Ausgangsleistung in Nichtpulszeiträumen (22) so angepasst variiert, dass der konstante Wert ($\overline{P}_{const}$) für die mittlere optische Ausgangsleistung ($\overline{P}$) unabhängig von der Einstellung des Schaltabstands und/oder der Empfindlichkeit festgelegt ist.

4. Optische Sensorvorrichtung nach einem der vorangehenden Ansprüche, **dadurch gekennzeichnet, dass** die Ansteuerungseinrichtung (18) eine Pulsbreite und/oder Pulshöhe einstellt, und insbesondere dass die Ansteuerungseinrichtung (18) eine Ausgangsleistung in Nichtpulszeiträumen (22) einstellt.

5. Optische Sensorvorrichtung nach einem der vorangehenden Ansprüche, **dadurch gekennzeichnet, dass** Lichtpulse (20) Rechteckpulse sind.

6. Optische Sensorvorrichtung nach einem der vorangehenden Ansprüche, **dadurch gekennzeichnet, dass** eine Periode einen einzigen Lichtpuls (20) aufweist.

7. Optische Sensorvorrichtung nach einem der vorangehenden Ansprüche, **gekennzeichnet durch** einen Sendepulsgenerator (34).

8. Optische Sensorvorrichtung nach einem der vorangehenden Ansprüche, **gekennzeichnet durch** eine erste steuerbare Stromquelle (26) zur Erzeugung von Lichtpulsen (20) und eine zweite steuerbare Stromquelle (28) zur Lichterzeugung in Nichtpulszeiträumen (22), wobei die erste Stromquelle (26) und die zweite Stromquelle (28) die Sendeeinrichtung (12) beaufschlagen, und insbesondere dass die erste steuerbare Stromquelle (26) **durch** einen Sendepulsgenerator (34) angesteuert ist.

9. Optische Sensorvorrichtung nach Anspruch 8, **gekennzeichnet durch** einen steuerbaren Schalter (36), welcher von dem Sendepulsgenerator (34) angesteuert ist und über welchen eine Strombeaufschlagung der Sendeeinrichtung (12) **durch** die erste Stromquelle (26) schaltbar ist.

**10.** Optische Sensorvorrichtung nach Anspruch 8 oder 9, **dadurch gekennzeichnet, dass** die Anpassungseinrichtung (40) einen Sendestrom ($I_{puls}$) der ersten Stromquelle (26) für einen Lichtpuls (20) und einen Sendestrom ($I_{pause}$) der zweiten Stromquelle (28) für einen Nichtpulszeitraum in einer festen Beziehung festlegt.

**11.** Optische Sensorvorrichtung nach Anspruch 10, **dadurch gekennzeichnet, dass** die Beziehung

$$\alpha \, I_{puls} = k + \beta \cdot I_{pause}^{-1}$$

ist, wobei $I_{puls}$ der Sendestrom für einen Lichtpuls (20), $I_{pause}$ der Sendestrom für einen Nichtpulszeitraum (22), $\alpha$ und $\beta$ Faktoren sind und k ein konstanter Offset.

**12.** Verfahren zum Betreiben einer optischen Sensorvorrichtung mit einstellbarem Schaltabstand und/oder einstellbarer Empfindlichkeit, bei dem periodisch optische Lichtpulse gesendet werden, wobei eine mittlere optische Ausgangsleistung auf einen konstanten Wert festgelegt wird, welcher unabhängig von dem eingestellten Schaltabstand und/oder der eingestellten Empfindlichkeit ist, und bei Änderung der Einstellung des Schaltabstands und/oder der Einstellung der Empfindlichkeit die optische Sendeleistung von einem oder mehreren Lichtpulsen in einer Periode und die optische Ausgangsleistung in Nichtpulszeiträumen zwischen Lichtpulsen in einer Periode so gesteuert angepasst wird, dass die mittlere optische Ausgangsleistung in einer Periode konstant bleibt.

**13.** Verfahren nach Anspruch 12, **dadurch gekennzeichnet, dass** eine Amplitude und/oder Breite von Lichtpulsen und/oder eine Ausgangsleistung in Nichtpulszeiträumen angepasst wird, um eine konstante mittlere optische Ausgangsleistung unabhängig von der Einstellung des Schaltabstands und/oder der Empfindlichkeit zu erhalten.

**14.** Verfahren nach Anspruch 12 oder 13, **dadurch gekennzeichnet, dass** eine optische Sendeeinrichtung durch den Sendestrom einer ersten Stromquelle und einer zweiten Stromquelle beaufschlagt wird, wobei die Ströme der ersten Stromquelle und der zweiten Stromquelle in einer festen Beziehung zueinander stehen.

**15.** Verfahren nach Anspruch 14, **dadurch gekennzeichnet, dass** der Sendestrom der ersten Stromquelle gepulst wird.

**Claims**

**1.** Optical sensor apparatus, comprising an optical transmit device (12), a receive device (14) for light emitted by the transmit device (12) and a control device (18) for the transmit device (12) by which the transmit device (12) is controlled such that it transmits periodic light pulses (20), wherein the control device (18) comprises an adjustment device (32) for a switching distance and/or a sensitivity of the optical sensor apparatus, **characterized in that** the control device (18) comprises an adapting device (40) by which an average optical output power ($\overline{P}$) of the transmit device (12) is adjusted to a constant value ($\overline{P}_{const}$) independently of the adjustment of the switching distance and/or of the sensitivity by the adapting device (40) adapting the optical output power in light pulses (20) within one period and the optical output power in non-pulse time periods (22) within one period in a controlled manner.

**2.** Optical sensor apparatus in accordance with claim 1, **characterized in that** the constant value ($\overline{P}_{const}$) is fixedly predetermined or is fixably adjustable.

**3.** Optical sensor apparatus in accordance with any one of the preceding claims, **characterized in that**, when the adjustment of the switching distance and/or of the sensitivity is varied, the adapting device (40) adaptingly varies a transmit power of the light pulses (20) and the output power in non-pulse time periods (22) such that the constant value ($\overline{P}_{const}$) for the average optical output power ($\overline{P}$) is fixed independently of the adjustment of the switching distance and/or of the sensitivity.

**4.** Optical sensor apparatus in accordance with any one of the preceding claims, **characterized in that** the control device (18) adjusts a pulse width and/or a pulse height and, in particular, **characterized in that** the control device (18) adjusts an output power in non-pulse time periods (22).

5.  Optical sensor apparatus in accordance with any one of the preceding claims, **characterized in that** the light pulses (20) are rectangular pulses.

6.  Optical sensor apparatus in accordance with any one of the preceding claims, **characterized in that** a period comprises a single light pulse (20).

7.  Optical sensor apparatus in accordance with any one of the preceding claims, **characterized by** a transmit pulse generator (34).

8.  Optical sensor apparatus in accordance with any one of the preceding claims, **characterized by** a first controllable current source (26) for generating light pulses (20) and a second controllable current source (28) for generating light in non-pulse time periods (22), wherein the first current source (26) and the second current source (28) apply current to the transmit device (12), and in particular **characterized by** the first controllable current source (26) being controlled by a transmit pulse generator (34).

9.  Optical sensor apparatus in accordance with claim 8, **characterized by** a controllable switch (36) which is controlled by the transmit pulse generator (34) and via which application of current to the transmit device (12) by the first current source (26) is switchable.

10. Optical sensor apparatus in accordance with claim 8 or 9, **characterized in that** the adapting device (40) fixes a transmit current ($I_{puls}$) of the first current source (26) for a light pulse (20) and a transmit current ($I_{pause}$) of the second current source (28) for a non-pulse time period in a fixed relationship to one another.

11. Optical sensor apparatus in accordance with claim 10, **characterized in that** the relationship is

$$\alpha\, I_{puls} = k + \beta \cdot I_{pause}^{-1}$$

wherein $I_{puls}$ is the transmit current for a light pulse (20), wherein $I_{pause}$ is the transmit current for a non-pulse time period (22), wherein $\alpha$ and $\beta$ are factors and wherein k is a constant offset.

12. Method for operating an optical sensor apparatus having an adjustable switching distance and/or an adjustable sensitivity, in which optical light pulses are periodically transmitted, wherein an average optical output power is fixed to a constant value, said value being independent of the adjusted switching distance and/or the adjusted sensitivity and wherein, when the adjustment of the switching distance and/or the adjustment of the sensitivity is varied, the optical transmit power of one or more light pulses within one period and the optical output power in non-pulse time periods between light pulses within one period is adapted in a controlled manner such that the average optical output power in one period remains constant.

13. Method in accordance with claim 12, **characterized in that** an amplitude and/or a width of light pulses and/or an output power in non-pulse time periods is adapted in order to obtain a constant average optical output power independently of the adjustment of the switching distance and/or of the sensitivity.

14. Method in accordance with claim 12 or 13, **characterized in that** an optical transmit device has applied thereto the transmit current of a first power source and of a second power source, wherein the currents of the first current source and the second current source are in a fixed relation to one another.

15. Method in accordance with claim 14, **characterized in that** the transmit current of the first power source is pulsed.

**Revendications**

1.  Dispositif de capteur optique, comprenant un dispositif d'émission optique (12), un dispositif de réception optique (14) pour une lumière émise par le dispositif d'émission (12), et un dispositif de commande (18) pour le dispositif d'émission (12), par lequel le dispositif d'émission (12) est commandé de telle manière qu'il envoie des impulsions lumineuses périodiques (20), dans lequel le dispositif de commande (18) présente un dispositif de réglage (32) pour un intervalle de commutation et/ou une sensibilité du dispositif de capteur optique, **caractérisé en ce que** le dispositif de commande (18) comprend un dispositif d'adaptation (40), par lequel une puissance de sortie optique moyenne ($\overline{P}$) du dispositif d'émission (12) est réglée à une valeur constante ($\overline{P}_{const}$) indépendamment du réglage de l'intervalle de commutation et/ou de la sensibilité, du fait que le dispositif d'adaptation (40) adapte de façon commandée la puissance de sortie optique dans des impulsions lumineuses (20) dans une période et la puissance de sortie optique dans des intervalles de temps de non-impulsion (22) à l'intérieur d'une période.

2. Dispositif de capteur optique selon la revendication 1, **caractérisé en ce que** la valeur constante ($\overline{P}_{const}$) est prédéterminée de façon fixe ou est réglable de façon déterminable.

3. Dispositif de capteur optique selon une des revendications précédentes, **caractérisé en ce que** le dispositif d'adaptation (40) fait varier de façon adaptée, lors d'une variation du réglage de l'intervalle de commutation et/ou de la sensibilité, une puissance d'émission des impulsions lumineuses (20) et de la puissance de sortie dans les intervalles de temps de non-impulsion (22), de telle manière que la valeur constante ($\overline{P}_{const}$) soit fixée pour la puissance de sortie optique moyenne (P) indépendamment du réglage de l'intervalle de commutation et/ou de la sensibilité.

4. Dispositif de capteur optique selon l'une quelconque des revendications précédentes, **caractérisé en ce que** le dispositif de commande (18) règle une largeur d'impulsion et/ou une hauteur d'impulsion, et en particulier **en ce que** le dispositif de commande (18) règle une puissance de sortie dans les intervalles de temps de non-impulsion (22).

5. Dispositif de capteur optique selon l'une quelconque des revendications précédentes, **caractérisé en ce que** les impulsions lumineuses (20) sont des impulsions rectangulaires.

6. Dispositif de capteur optique selon l'une quelconque des revendications précédentes, **caractérisé en ce qu'**une période présente une seule impulsion lumineuse (20).

7. Dispositif de capteur optique selon l'une quelconque des revendications précédentes, **caractérisé par** un générateur d'impulsions d'émission (34).

8. Dispositif de capteur optique selon l'une quelconque des revendications précédentes, **caractérisé par** une première source de courant réglable (26) pour la production d'impulsions lumineuses (20) et une deuxième source de courant réglable (28) pour la production de lumière dans les intervalles de temps de non-impulsion (22), dans lequel la première source de courant (26) et la deuxième source de courant (28) alimentent le dispositif d'émission (12), et en particulier en ce que la première source de courant réglable (26) est commandée par un générateur d'impulsions d'émission (34).

9. Dispositif de capteur optique selon la revendication 8, **caractérisé par** un interrupteur réglable (36), qui est commandé par le générateur d'impulsions d'émission (34) et par lequel une alimentation en courant du dispositif d'émission (12) par la première source de courant (26) peut être commutée.

10. Dispositif de capteur optique selon la revendication 8 ou 9, **caractérisé en ce que** le dispositif d'adaptation (40) fixe un courant d'émission ($I_{puls}$) de la première source de courant (26) pour une impulsion lumineuse (20) et un courant d'émission ($I_{pause}$) de la deuxième source de courant (28) pour un intervalle de temps de non-impulsion selon une relation fixe.

11. Dispositif de capteur optique selon la revendication 10, **caractérisé en ce que** la relation est

$$\alpha\, I_{puls} = k + \beta\, \cdot\, I_{pause}^{-1}$$

dans laquelle $I_{puls}$ est le courant d'émission pour une impulsion lumineuse (20), $I_{pause}$ est le courant d'émission pour un intervalle de temps de non-impulsion (22), $\alpha$ et $\beta$ sont des facteurs et k est un terme constant.

12. Procédé d'utilisation d'un dispositif de capteur optique avec un intervalle de commutation réglable et/ou une sensibilité réglable, dans lequel on émet périodiquement des impulsions lumineuses optiques, dans lequel on fixe une puissance de sortie optique moyenne à une valeur constante, qui est indépendante de l'intervalle de commutation réglé et/ou de la sensibilité réglée, et lors d'un changement du réglage de l'intervalle de commutation et/ou du réglage de la sensibilité, on adapte la puissance d'émission optique d'une ou de plusieurs impulsions lumineuses dans une période et la puissance de sortie optique dans des intervalles de temps de non-impulsion entre des impulsions lumineuses dans une période de façon commandée, de telle manière que la puissance de sortie optique moyenne reste constante dans une période.

**13.** Procédé selon la revendication 12, **caractérisé en ce que** l'on adapte une amplitude et/ou une largeur d'impulsions lumineuses et/ou une puissance de sortie dans des intervalles de temps de non-impulsion, afin d'obtenir une puissance de sortie optique moyenne constante indépendamment du réglage de l'intervalle de commutation et/ou de la sensibilité.

**14.** Procédé selon la revendication 12 ou 13, **caractérisé en ce que** l'on alimente un dispositif d'émission optique avec le courant d'émission d'une première source de courant et d'une deuxième source de courant, dans lequel les courants de la première source de courant et de la deuxième source de courant sont liés l'un à l'autre par une relation fixe.

**15.** Procédé selon la revendication 14, **caractérisé en ce que** le courant d'émission de la première source de courant est pulsé.

FIG.1

EP 2 302 415 B1

# FIG.2

(a)

(b)

(c)

**IN DER BESCHREIBUNG AUFGEFÜHRTE DOKUMENTE**

**In der Beschreibung aufgeführte Patentdokumente**

- DE 19855296 C1
- DE 10018948 A1
- DE 102004002530 A1
- DE 102008014274 A1